(19) **Europäisches Patentamt**

**European Patent Office**

**Office européen des brevets**

(11) Veröffentlichungsnummer: **0 335 280 B1**

(12) # EUROPÄISCHE PATENTSCHRIFT

(45) Veröffentlichungstag der Patentschrift:
11.09.91 Patentblatt 91/37

(51) Int. Cl.⁵: **C02F 1/52, C02F 1/58**

(21) Anmeldenummer: 89105321.7

(22) Anmeldetag: 24.03.89

(54) **Verfahren zur Reinigung von Abwasser mit hohen Gehalt an Ammonium-Ionen.**

(30) Priorität: 30.03.88 DE 3810720

(43) Veröffentlichungstag der Anmeldung:
04.10.89 Patentblatt 89/40

(45) Bekanntmachung des Hinweises auf die
Patenterteilung:
11.09.91 Patentblatt 91/37

(84) Benannte Vertragsstaaten:
AT BE CH DE FR GB LI NL SE

(56) Entgegenhaltungen:
DE-A- 3 732 896
CHEMICAL ABSTRACTS, Band 107, Nr. 6, 10.
August 1987, Seite 371, Nr. 45633c, Columbus,
Ohio, US; R. SCHULZE-RETTMER: "Critical
view on denitrification and alternatives", &
KORRESP. ABWASSER 1987, 34(3), 218-20,
222

(56) Entgegenhaltungen:
CHEMICAL ABSTRACTS, Band 107, Nr. 14, 5.
Oktober 1987, Seite 316, Nr. 120567q, Columbus, Ohio, US; & US-A-283 (T.E. MYERS et al.)
02-06-1987
CHEMICAL ABSTRACTS, Band 109, Nr. 22, 28.
November 1988, Seite 401, Nr. 196433e, Columbus, Ohio, US; Z. LI: "Chemical sedimentation for nitrogen removal from wastewater", &
SHANGHAI HUANJING KEXUE 1988, 7(2), 37-8

(73) Patentinhaber: Yawari, Touraj, Dipl.-Ing.
Kahlgrachtstrasse 54
W-5100 Aachen (DE)

(72) Erfinder: Schulze-Rettmer, Rainer, Dr.
Soerser Winkel 22
W-5100 Aachen (DE)
Erfinder: Yawari, Touraj, Dipl.-Ing.
Kahlgrachtstrasse 54
W-5100 Aachen (DE)

(74) Vertreter: Andrejewski, Walter et al
Patentanwälte Andrejewski, Honke & Partner
Postfach 10 02 54 Theaterplatz 3
W-4300 Essen 1 (DE)

**Beschreibung**

Die Erfindung betrifft ein Verfahren zur Reinigung, insbes. zur kontinuierlichen Reinigung, von Abwasser mit hohem Gehalt an Ammonium-Ionen und ggf. einem Gehalt an Phosphat-Ionen durch Ausfällen von Magnesium-Ammonium-Phosphat $(MgNH_4PO_4 \times 6H_2O)$, wobei in einer Einstellungsstufe für das N : P-Verhältnis der Gehalt des Abwassers an Ammonium-Ionen bestimmt und nach Maßgabe des Gehaltes des Abwassers an Ammonium-Ionen erforderlichenfalls Phosphat-Ionen zugegeben werden, wobei in einer Mischstufe eine Aufschlämmung von Magnesiumoxid und/oder Magnesium-Ionen im Überschuß beigemischt sowie ein pH-Wert im basischen Bereich eingestellt wird, und wobei aus der Mischung mit dem angegebenen pH-Wert in einem Reaktionsbehälter Magnesium-Ammonium-Phosphat ausgefällt sowie aus dem Reaktionsbehälter dieses Magnesium-Ammonium-Phosphat sowie ein von Ammonium weitgehend befreiter Ablauf abgezogen werden. Die beschriebenen Maßnahmen umfassen auch eine Verfahrensweise, bei der auch die Phosphat-Ionen im Abwasser gemessen und nach Maßgabe dieses Gehaltes an Phosphat-Ionen die Dosierung vorgenommen wird. — Der Begriff Abwasser umfaßt im Rahmen der Erfindung jedes ammoniumhaltige Abwasser, z.B. kommunales Abwasser, aber auch Gülle. Der Begriff Gülle meint Flüssigmist, d.h. Abgänge von Vieh, die aus einer wässrigen Phase mit einem hohen Feststoffgehalt bestehen. Die Feststoffe werden im allgemeinen aus dem zulaufenden Abwasser ausreichend entfernt, ehe das beschriebene Verfahren durchgeführt wird.

Bei dem eingangs beschriebenen Verfahren, von dem die Erfindung ausgeht (DE-OS 3732896) kommt man zu guten Ergebnissen. Das ausgefällte Magnesium-Ammonium-Phosphat ist ohne weiteres als Düngemittel einsetzbar. Die Ausbeute an Magnesium-Ammonium-Phosphat ist jedoch verbesserungsbedürftig und folglich ist der Ammonium-Gehalt im Ablauf noch verhältnismäßig hoch.

Der Erfindung liegt die Aufgabe zugrunde, das eingangs beschriebene Verfahren so zu führen, daß die Ausbeute an Magnesium-Ammonium-Phosphat wesentlich verbessert wird und ein sehr weitgehend ammoniumfreies Abwasser abgezogen werden kann.

Zur Lösung dieser Aufgabe lehrt die Erfindung, daß zwischen der Einstellungsstufe und der Mischstufe eine Vorbehandlung des eingestellten Abwassers mit einer Verweilzeit von 5 bis 30 min durchgeführt wird, in der der pH-Wert im sauren Bereich eingestellt wird, und daß danach in der Mischstufe der pH-Wert in einer ersten Teilstufe auf einen Wert im fast neutralen Bereich langsam angehoben wird, bis eine erste Trübung stattfindet, daß die Mischung etwa 5 bis 30 min in diesem Zustand (bei diesem pH-Wert) gehalten wird, und daß danach der pH-Wert in einer zweiten Teilstufe weiter in den basischen Bereich angehoben und die Ausfällung durchgeführt wird. Fast neutral meint einen pH-Wert im Bereich von 5 bis 7, vorzugsweise wenig kleiner als 7. — Überraschenderweise erreicht man durch diese Vorbehandlung eine wesentliche Verbesserung der Ausbeute an Magnesium-Ammonium-Phosphat, die 90% und mehr betragen kann. Der Ablauf, d.h. das ablaufende, gereinigte Abwasser, hat nur noch einen sehr geringen Gehalt an Ammonium. Vermutlich wird durch die Vorbehandlung verhindert, daß sich in der Mischstufe störendes Magnesiumkarbonat aus ohnehin vorhandener Kohlensäure bildet und die Ausbeute beeinträchtigt. — Vorzugsweise wird bei der Vorbehandlung mit einem pH-Wert 2 bis 5, z.B. mit einem pH-Wert von 3 oder 4, gearbeitet. Die Verweilzeit ist um so größer, je höher der pH-Wert gewählt wird.

Im einzelnen bestehen im Rahmen der Erfindung mehrere Möglichkeiten für die Vorbehandlung. So kann der saure Bereich des pH-Wertes durch Phosphorsäure eingestellt werden, wenn Phosphorsäure in der Einstellungsstufe ohnehin zugegeben wird. Man kann aber auch zusätzliche Phosphorsäure oder Schwefelsäure zugeben, um für die Vorbehandlung den sauren Bereich des pH-Wertes einzustellen.

Arbeitet man im Rahmen des erfindungsgemäßen Verfahrens diskontinuierlich, so lehrt die Erfindung, daß die Vorbehandlung, die Mischstufe und die Ausfällung des Magnesium-Ammonium-Phosphates in dem gleichen Reaktionsbehälter durchgeführt werden. Bei kontinuierlicher Arbeitsweise lehrt die Erfindung, daß die Vorbehandlung und die Ausfällung in separaten Reaktionsbehältern durchgeführt werden.

In bezug auf die Stöchiometrie der Verhältnisse ist eine bevorzugte Ausführungsform der Erfindung dadurch gekennzeichnet, daß in der Einstellungsstufe mit einem stöchiometrischen Verhältnis N : P = 1 : 1 oder mit bis zu N : P = 1 : 0,7 minimiertem Phosphorgehalt gearbeitet wird. Bei der Beigabe von Magnesium-Ionen in der Mischstufe wird vorzugsweise mit einem stöchiometrischen Verhältnis im Bereich von N : Mg = 1 bis 1,5 gearbeitet. Der pH-Wert wird in der Mischstufe zweckmäßigerweise auf 8 bis 9,5 eingestellt.

Das kann durch die Beigabe einer zusätzlichen Lauge wie NaOH, das kann aber auch durch das eingeführte Magnesiumoxid geschehen.

Das erfindungsgemäße Verfahren eignet sich auf verschiedene Weise zur Kombination mit biologischen Verfahren zur Abwasserreinigung. Zum Beispiel kann das erfindungsgemäße Verfahren einem biologischen Reinigungsverfahren vorgeschaltet werden, selbstverständlich nach vorheriger Entfernung der Feststoffe des Abwassers. Im Rahmen einer Kombination mit einem biologischen Verfahren ist eine Ausführungsform der Erfindung, welche für die Behandlung von zulaufendem Rohabwasser mit hohem Gehalt an organischen Stickstoffverbindungen geeignet ist, dadurch gekennzeichnet, daß diese zunächst in einer biologischen, mittelbis hochbelasteten aeroben Vorbehandlungs-Belebungsstufe zu Ammonium und organischen Reststoffen bzw. Kohlendioxid gespalten und das in dieser Vorbehandlungsstufe ablaufende Abwasser nach Maßgabe von einem oder mehreren der Ansprüche 1 bis 8 gereinigt wird. Eine andere Ausführungsform, welche für die Behandlung von zulaufendem Rohabwasser mit einem hohen Gehalt an organischen Stickstoffverbindungen geeignet ist, ist dadurch gekennzeichnet, daß diese zunächst in einer anaeroben Vorbehandlungs-Belebungsstufe biologisch vorbehandelt werden und dadurch Ammonium freigesetzt wird und das aus dieser Vorbehandlungsstufe ablaufende Abwasser nach Maßgabe von einem oder mehreren der Ansprüche 1 bis 8 gereinigt wird. Insoweit handelt es sich stets um eine Zwischenschaltung des erfindungsgemäßen Verfahrens an einem Punkt, an dem die organischen Stickstoffverbindungen weitgehend hydrolysiert bzw. gespalten sind, aber noch ein wesentlicher Baustoffwechsel der aeroben Bakterien erfolgt, durch den die Restmenge aus Ammonium und Phosphat, die nach Einsatz des erfindungsgemäßen Verfahrens in der gelösten Phase verbleiben, in die Bakterienmasse inkarniert und somit aus dem Abwasser eliminiert werden. Die biologische Reinigung wird so gleichsam in zwei Teile getrennt. Das ist insbes. im Rahmen der sogenannten AB-Technologie (DE 2640875) vorteilhaft. Wenn der Ablauf aus einer Anlage für die Durchführung des erfindungsgemäßen Verfahrens störende Restkonzentrationen von Ammonium und Phosphat aufweist, lehrt die Erfindung, daß der Ablauf in einer biologischen Reinigungsanlage, z.B. in einer schwach belasteten Belebungsanlage, nachbehandelt wird.

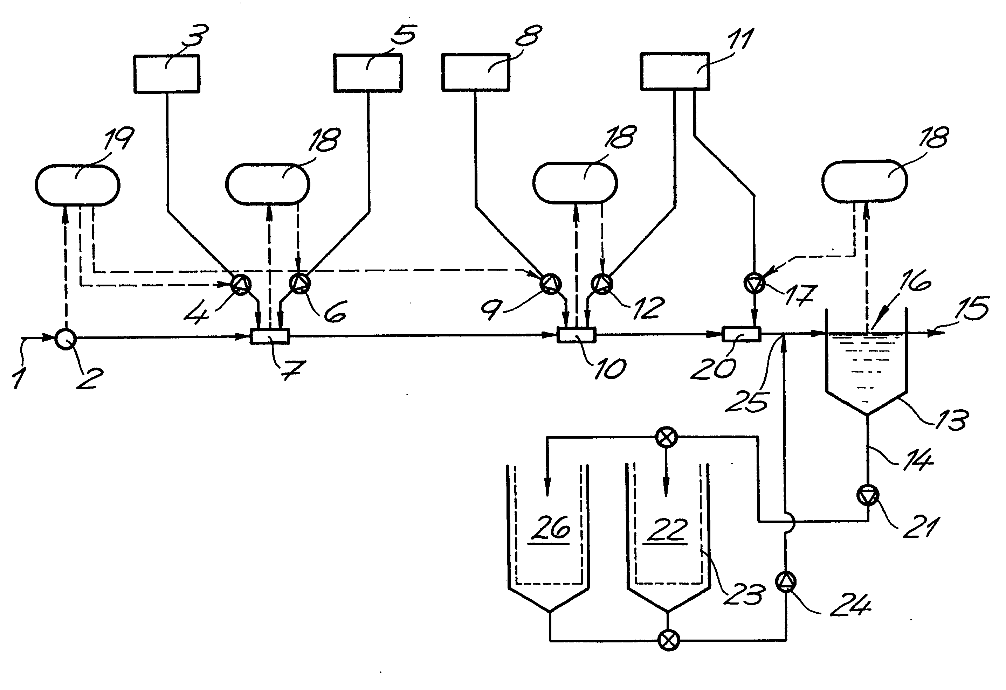

Die einzige Zeichnung erläutert eine Anlage für die Durchführung des erfindungsgemäßen Verfahrens. Diese Anlage ist ebenfalls Gegenstand der Erfindung und gekennzeichnet durch einen Abwasserzulauf 1 mit Analysator 2 für die Messung der Konzentration der Ammonium-Ionen im zulaufenden Abwasserstrom, einen Phosphatbehälter 3 für eine wässrige Lösung mit Phosphat-Ionen und eine Dosierpumpe 4 für die Zugabe von Phosphat-Ionen in den Abwasserstrom nach Maßgabe der Ammonium-Ionen-Konzentration im zulaufenden Abwasserstrom, einen Vorratsbehälter 5 für eine andere Säure als Ersatzsäure für Phosphorsäure (z.B. Schwefelsäure) und eine Dosierpumpe 6 für die Zugabe dieser Säure in den Abwasserstrom zur Einstellung des optimalen pH-Wertes für die Vorreaktion, eine Meßstelle 7 für die Messung des pH-Wertes im Abwasserstrom nach der Zugabe der Phosphat-Ionen und/oder der Ersatzsäure, einen Behälter 8 für eine Lösung mit Magnesium-Ionen und/oder eine Aufschlämmung von Magnesia (MgO) sowie eine Dosierpumpe 9 für die Zugabe von Magnesium (in Form von Magnesium-Ionen oder Magnesia) nach Maßgabe der Ammonium-Ionen-Konzentration im zulaufenden Abwasser, eine Meßstelle 10 für die Messung des pH-Wertes im Abwasserstrom nach Zugabe des Magnesiums, einen Vorratsbehälter 11 für eine andere Lauge (vorzugsweise Natronlauge) als Ersatzlauge für die MgO-Aufschlämmung und eine Dosierpumpe 12 für die Zugabe dieser Lauge zur Einstellung des optimalen pH-Wertes für die Hauptreaktion, wobei ein Kristallisationsbecken 13 nachgeschaltet ist, aus dem einerseits bei 14 Kristallbrei aus Magnesium-Ammonium-Phosphat und andererseits bei 15 ein fast vollständig von Ammonium befreiter Ablauf abziehbar ist.

Eine weitere Meßstelle 16 für die pH-Messung ist mit ihrer Elektrode im Abwasser des Kristallisationsbeckens 13 angebracht. Falls dort der pH-Wert nicht im Bereich zwischen 8,0 und 9,5 (je nach den gewünschten Bedingungen) liegt, sondern niedriger, wird an dem oben beschriebenen Vorratsbehälter 11 durch die Dosierpumpe 17 Ersatzlauge zudosiert, bis der gewünschte End-pH-Wert zwischen 8,0 und 9,5 erreicht ist. — Alle pH-Meßgeräte wurden mit 18 bezeichnet. Es versteht sich, daß die Meßstellen so ausgelegt sind (z.B. als entsprechende Behälter), daß die Messungen nach Beimischung der Chemikalien möglich sind.

Vor dem Abwasserzulauf 1 kann eine Zentrifuge oder ein anderer Feststoffabscheider für die Abscheidung suspendierter Feststoffe angeordnet sein.

Im einzelnen ist zum Betrieb der Anlage folgendes zu bemerken :

Der Zulauf soll nahezu frei von Feststoffen sein. Dies wird bei Gülle z.B. durch Vorschalten einer Zentrifuge oder einer Filterpresse erreicht. Falls sich noch ungelöste Stoffe im Zulauf befinden, so geraten sie zum größten Teil in das Kristallisat, das sie dadurch verunreinigen. Wenn auf den Reinheitsgrad des Kristallisats kein Wert gelegt wird, braucht die vorherige Feststoffabscheidung nicht so weit getrieben zu werden. Sie kann entfallen, wenn das Abwasser nur einen geringen Gehalt an Feststoffen aufweist.

Im Zulauf 1 wird der Gehalt an Ammonium-Ionen an der Meßstelle 2 gemessen. Dies geschieht bei größeren Anlagen und bei oft schwankender $NH_4$-Konzentration am besten mit Hilfe eines Ammonium-Analysators 19. Von diesem wird die Dosierung des Phosphatstromes je nach dem gewünschten stöchiometrischen Verhältnis N : P fest eingestellt. Aus dem Vorratsbehälter für Phosphat (oder Phosphorsäure) wird die Lösung durch die Pumpe 4 bei der Stelle 7 zugegeben. Es versteht sich, daß man auch den Gehalt des zulaufenden Abwassers an Phosphat-Ionen messen und für die Dosierung verwenden kann.

Durch das pH-Meßgerät 18 wird der pH-Wert an der Stelle 7 gemessen. Er muß niedriger als 5 sein. Wenn er höher liegt, wird hilfsweise eine andere Säure aus dem Vorratsbehälter 5 über die Dosierpumpe 6 bei 7 zugegeben.

Durch den Wertgeber des Ammonium-Analysators 19 wird weiter die Pumpe 9 gesteuert, bzw. ein fester Dosierungswert eingestellt. Aus dem Vorratstank 8 wird die Lösung des Magnesiumsalzes bzw. die Aufschlämmung von Magnesia (MgO) durch die Dosierpumpe 9 bei 10 dem Abwasserstrom zugemischt.

An der Stelle 10 im Abwasserstrom wird der nach der Zugabe der Magnesium-Lösung resultierende pH-Wert mittels Elektrode durch das zugeordnete pH-Meßgerät 18 gemessen. Er soll je nach Einstellung zwischen 5 und 7 liegen. Durch gesteuerte Zugabe von Natronlauge aus dem Vorratsbehälter 11 über die Dosierpumpe 12 kann ein vorgegebener pH-Wert zwischen 5 und 7 bei 10 eingestellt werden, falls er nicht bereits nach Zugabe von MgO in diesem Bereich liegt.

Nach einer bestimmten mittleren Reaktionszeit, die sich aus der Dimensionierung eines Reaktionsbehälters bei 10 ergibt, fließt das Abwasser weiter an der Dosierstelle 20 vorbei in den Reaktions- und Kristallisationsbehälter 13. Der pH-Wert des Abwassers in diesem Behälter wird bei 16 durch das zugeordnete Meßgerät 18 gemessen, von dem ein Dosierungsbefehl entweder an die Pumpe 12 (für MgO) oder an die Pumpe 17 (für NaOH) ausgeht und entweder aus dem Vorratsbehälter 8 eine Aufschlämmung von MgO oder aus dem Vorratsbehälter 11 Natronlauge bei 20 dem Abwasserstrom zugemischt wird, bis der gewünschte pH-Wert zwischen 8 und 9,5 liegt.

Das Abwasser mit den zugegebenen Chemikalien verweilt in dem Kristallisationsbecken 13 eine bestimmte Zeit (z.B. im Durchschnitt 30 min). Das Kristallisat setzt sich ab und wird von Zeit zu Zeit (nach eingestellten Zeittakten) durch die Pumpe 21 in den Kristallisatbehälter 22 übergepumpt. Das überstehende Wasser, das fast vollständig von Ammonium befreit ist, fließt in den Ablauf 15. Die Trennung von Kristallisat und klarem Abwasser kann durch Einbau von Trenneinrichtungen in den Behälter 13 gefördert werden, z.B. auch Lamellenabscheider oder Tauchwände.

Aus dem Behälter 22 kann das an dem Kristallbrei anhaftende Wasser austreten (Sickerwasser). Dazu hat der Behälter 22 feine Löcher. In den Lochbehälter wird ein Sack 23 aus feinmaschigem Gewebe eingehängt, das den Kristallkuchen zurückhält. Bei Vollfüllung des Sackes wird der Prozeß in der Anlage gestoppt, der mit Magnesium-Ammonium-Phosphat gefüllte Sack herausgeholt und ein leerer Sack eingehängt. In dem äußeren, dichten Mantel des Behälters 22 sammelt sich das Sickerwasser, das von Zeit zu Zeit oder kontinuierlich je nach Füllstand durch die Pumpe 24 an der Stelle 25 dem Strom wieder zugeführt wird. Wenn die Kristallisationsanlage kontinuierlich betrieben werden soll, so muß ein zweiter Behälter 26 installiert werden, der bei Füllung des ersten eingeschaltet wird.

**Patentansprüche**

1. Verfahren zur Reinigung, insbes. zur kontinuierlichen Reinigung, von Abwasser mit hohem Gehalt an Ammonium-Ionen und ggf. einem Gehalt an Phosphat-Ionen durch Ausfällen von Magnesium-Ammonium-Phosphat ($MgNH_4PO_46H_2O$), wobei in einer Einstellungsstufe für das N : P-Verhältnis der Gehalt des Abwassers an Ammonium-Ionen bestimmt und nach Maßgabe des Gehaltes des Abwassers an Ammonium-Ionen erforderlichenfalls Phosphat-Ionen zugegeben werden, wobei in einer Mischstufe eine Aufschlämmung von Magnesiumoxid und/oder Magnesium-Ionen im Überschuß beigemischt sowie ein pH-Wert im basischen Bereich eingestellt wird, und wobei aus der Mischung mit dem angegebenen pH-Wert in einem Reaktionsbehälter Magnesium-Ammonium-Phosphat ausgefällt sowie aus dem Reaktionsbehälter dieses Magnesium-Ammonium-Phosphat sowie ein vom Ammonium weitgehend befreiter Ablauf abgezogen werden, **dadurch gekennzeichnet**, daß zwischen der Einstellungsstufe und der Mischstufe eine Vorbehandlung des eingestellten Abwassers mit einer Verweilzeit von 5 bis 30 min durchgeführt wird, in der der pH-Wert im sauren Bereich eingestellt wird, und daß danach in der Mischstufe der pH-Wert in einer ersten Teilstufe auf einen Wert im fast neutralen Bereich langsam angehoben wird, bis eine erste Trübung stattfindet, daß die Mischung etwa 5 bis 30 min in diesem Zustand (d.h. bei diesem pH-Wert) gehalten wird, und daß danach in einer zweiten Teilstufe der pH-Wert weiter in den basischen Bereich angehoben und die Ausfällung durchgeführt wird.

2. Verfahren nach Anspruch 1, dadurch gekennzeichnet, daß der saure Bereich des pH-Wertes durch Phosphorsäure oder Schwefelsäure eingestellt wird.

3. Verfahren nach einem der Ansprüche 1 oder 2, dadurch gekennzeichnet, daß bei diskontinuierlicher Arbeitsweise die Vorbehandlung, die Mischstufe und die Ausfällung des Magnesium-Ammonium-Phosphates in dem gleichen Reaktionsbehälter durchgeführt werden.

4. Verfahren nach einem der Ansprüche 1 oder 2, dadurch gekennzeichnet, daß bei kontinuierlicher Arbeitsweise die Vorbehandlung und die Ausfällung in separaten Reaktionsbehältern durchgeführt werden.

5. Verfahren nach einem der Ansprüche 1 bis 4, dadurch gekennzeichnet, daß in der Einstellungsstufe mit einem stöchiometrischen Verhältnis N : P = 1 : 1 oder mit bis zu N : P = 1 : 0,7 minimiertem Phosphatgehalt gearbeitet wird.

6. Verfahren nach einem der Ansprüche 1 bis 5 in der Ausführungsform mit Beigabe von Magnesium-Ionen in der Mischstufe, dadurch gekennzeichnet, daß mit einem stöchiometrischen verhältnis im Bereich von N : Mg = 1 bis 1,5 gearbeitet wird.

7. Verfahren nach Anspruch 6, dadurch gekennzeichnet, daß der pH-Wert in der Mischstufe von 8 bis 9,5 durch eine zusätzliche Lauge, wie NaOH, eingestellt wird.

8. Verfahren nach einem der Ansprüche 1 bis 5, dadurch gekennzeichnet, daß der pH-Wert in der Mischstufe von 8 bis 9,5 durch Magnesiumoxid eingestellt wird.

9. Verfahren nach einem der Ansprüche 1 bis 8 in der Ausführungsform für die Behandlung von zulaufendem Rohabwasser mit einem hohen Gehalt an organischen Stickstoffverbindungen, dadurch gekennzeichnet, daß diese zunächst in einer biologischen mittel- bis hochbelasteten aeroben Vorbehandlungsstufe zu Ammonium und organischen Reststoffen bzw. Kohlendioxid gespalten und das aus dieser Vorbehandlungsstufe ablaufende Wasser nach Maßgabe von einem oder mehreren der Ansprüche 1 bis 8 gereinigt wird.

10. Verfahren nach einem der Ansprüche 1 bis 8 in der Ausführungsform für die Behandlung von zulaufendem Rohabwasser mit einem hohen Gehalt an organischen Stickstoffverbindungen, dadurch gekennzeichnet, daß diese zunächst in einer anaeroben Vorbehandlungsstufe biologisch vorbehandelt und dadurch Ammonium freigesetzt wird und das aus dieser Vorbehandlungsstufe ablaufende Abwasser nach Maßgabe von einem oder mehreren der Ansprüche 1 bis 8 gereinigt wird.

## Claims

1. A process of purification, and particularly of continuous purification, of waste water with a high content of ammonium ions and possibly a content of phosphate ions by precipitation of magnesium ammonium phosphate ($MgNH_4PO_4 \cdot 6H_2O$), in which the content of ammonium ions in the waste water is determined in an adjustment stage for the N : P ratio and if necessary phosphate ions are added in proportion to the content of ammonium ions in the waste water, in which an excess of a sludge of magnesium oxide and/or magnesium ions is added in a mixing stage and adjustment is made to a pH-value in the basic range, and in which magnesium ammonium phosphate precipitates in a reaction container out of the mixture with the stated pH-value and this magnesium ammonium phosphate is withdrawn from the reaction container, as is an effluent that is to a large extent freed from ammonium, *characterized in that* between the adjustment stage and the mixing stage a pre-treatment of the adjusted waste water is performed with a duration of 5 to 30 minutes, in which the pH-value is adjusted to be in the acid region and that subsequently in the mixing stage the pH-value is slowly raised in a first partial stage to a value that is in the practically neutral range, until a first cloudiness takes place, that the mixture is retained for about 5 to 30 minutes in this condition (i.e. with this pH-value), and that subsequently in a second partial stage the pH-value is further raised into the basic region and the precipitation is performed.

2. A process according to Claim 1, *characterized in that* the acid region of the pH-value is adjusted by phosphoric acid or sulphuric acid.

3. A process according to one of Claims 1 or 2, *characterized in that* when the operation is on a discontinuous basis the pre-treatment, the mixing stage, and the precipitation of magnesium ammonium phosphate are performed in the same reaction container.

4. A process according to one of Claims 1 or 2, *characterized in that* when the operation is on a continuous basis the pre-treatment and the precipitation are performed in separate reaction containers.

5. A process according to one of Claims 1 to 4, *characterized in that* in the adjustment stage a stoicheiometric ratio N : P = 1 : 1 or a phosphorus content minimized to N : P = 1 : 0.7 is used.

6. A process according to one of Claims 1 to 5 in the form of performance with the addition of magnesium ions in the mixing stage, *characterized in that* a stoicheiometric ratio in the region of N : Mg = 1 to 1.5 is used.

7. A process according to Claim 6, *characterized in that* the pH-value in the mixing stage is adjusted to from 8 to 9.5 by an additional lye, such as NaOH.

8. A process according to one of Claims 1 to 5, *characterized in that* the pH-value in the mixing stage is adjusted to from 8 to 9.5 by magnesium oxide.

9. A process according to one of Claims 1 to 8 in the form of performance for the treatment of inflowing waste water with a high content of organic nitrogen compounds, *characterized in that* these compounds are initially broken up in an aerobic, medium to highly-loaded biological pre-treatment stage into ammonium and organic residues or carbon dioxide, and the water flowing out of this pre-treatment stage is purified in accordance with one or more of Claims 1 to 8.

10. A process according to one of Claims 1 to 8 in the form of performance for the treatment of inflowing waste water with a high content of organic nitrogen compounds, *characterized in that* these compounds are initially biologically pre-treated in an anaerobic pre-treatment stage and thereby ammonium is set free, and the waste water flowing out of this pre-treatment stage is purified in accordance with one or more of Claims 1 to 8.

## Revendications

1. Procédé de purification, notamment de purification en continu, d'eau usée ayant une forte concentration d'ions d'ammonium et éventuellement d'ions de phosphate, par précipitation de phosphate ammoniacomagnésien ($MgNH_4PO_4 6H_2O$), la concentration d'ions d'ammonium dans l'eau usée étant déterminée dans une phase de réglage pour le rapport N : P et des ions de phosphate étant ajoutés, si nécessaire, en fonction de la concentration d'ions d'ammonium dans l'eau usée, une suspension d'oxyde de magnésium et/ou d'ions de magnésium étant ajoutée en excédent dans une phase de mélange, un pH étant réglé dans le domaine basique, du phosphate ammoniacomagnésien étant précipité du mélange présentant le pH indiqué, dans un réacteur et ledit phosphate ammoniacomagnésien ainsi qu'un écoulement exempt dans une large mesure d'ammonium étant soutirés du réacteur, **caractérisé par le fait** qu'entre la phase de réglage et la phase de mélange est effectué un traitement préparatoire de l'eau usée réglée avec un temps de séjour de 5 à 30 min pendant lequel le pH est réglé dans le domaine basique ; qu'ensuite, dans la phase de mélange, le pH est élevé lentement dans une première phase partielle à une valeur dans la plage presque neutre jusqu'à l'apparition d'un premier trouble ; que le mélange est maintenu dans cet état (c'est-à-dire à cette valeur pH) pendant environ 5 à 30 min ; et qu'une nouvelle élévation du pH dans le domaine basique et la précipitation sont effectuées dans une seconde phase partielle.

2. Procédé selon la revendication 1, caractérisé par le fait que le domaine acide du pH est réglé à l'aide de l'acide phosphorique ou de l'acide sulfurique.

3. Procédé selon l'une des revendications 1 ou 2, caractérisé par le fait que dans le cas d'un fonctionnement discontinu, le traitement préparatoire, la phase de mélange et la précipitation du phosphate ammoniacomagnésien sont réalisés dans le même réacteur.

4. Procédé selon l'une des revendications 1 ou 2, caractérisé par le fait que dans le cas d'un fonctionnement en continu, le traitement préparatoire, et la précipitation sont effectués dans des réacteurs séparés.

5. Procédé selon l'une des revendications 1 à 4, caractérisé par le fait que dans la phase de réglage, on travaille avec un rapport stoechiométrique N : P = 1 : 1 ou avec une teneur en phosphate minimisée jusqu'à N : P = 1 : 0,7.

6. Procédé selon l'une des revendications 1 à 5, dans le mode de réalisation avec addition d'ions de magnésium dans la phase de mélange, caractérisé par le fait que l'on travaille avec un rapport stoechiométrique dans la plage de N : Mg = 1 : 1,5.

7. Procédé selon la revendication 6, caractérisé par le fait que dans la phase de mélange, le pH est réglé sur 8 à 9,5 au moyen d'une lessive supplémentaire telle que NaOH.

8. Procédé selon l'une des revendications 1 à 5, caractérisé par le fait que dans la phase de mélange, le pH est réglé sur 8 à 9,5 au moyen d'oxyde de magnésium.

9. Procédé selon l'une des revendications 1 à 8, dans le mode de réalisation pour le traitement d'eau usée brute amenée avec une forte teneur en composés organiques azotés, caractérisé par le fait que ces composés sont tout d'abord dissociés, dans une phase de traitement préparatoire biologique aérobie moyennement à fortement chargée, en ammonium et en substances organiques résiduaires et respectivement en dioxyde de carbone, et que l'eau usée s'écoulant de cette phase de traitement préparatoire est purifiée selon l'une ou plusieurs des revendications 1 à 8.

10. Procédé selon l'une des revendications 1 à 8, dans le mode de réalisation pour le traitement d'eau usée amenée avec une forte concentration de composés organiques azotés, caractérisé par le fait que ces composés sont tout d'abord soumis à un traitement biologique préalable dans une phase de traitement préparatoire anaérobie, avec dégagement d'ammonium, et que l'eau usée s'écoulant de cette phase de traitement préparatoire est purifiée selon l'une ou plusieurs des revendications 1 à 8.